# EUROPÄISCHE PATENTSCHRIFT

(11) **EP 2 067 665 B1**
(45) Veröffentlichungstag und Bekanntmachung des Hinweises auf die Patenterteilung: **12.12.2012**
(21) Anmeldenummer: 09004538.6
(22) Anmeldetag: 10.10.2007
(51) Int. Cl.: B60R 13/00, B60R 21/215, B60Q 1/26, B60Q 1/56, G09F 13/00, G09F 13/22

(54) **Baugruppe zur beleuchteten Darstellung eines Logos**
Component for illuminated representation of a logo
Composant destiné à l'affichage lumineux d'un logo

(30) Priorität: 12.10.2006 DE 102006048347; 02.03.2007 DE 102007010328
(43) Veröffentlichungstag der Anmeldung: 10.06.2009
(62) Teilanmeldung aus: 07019807.2
(73) Patentinhaber: TRW Automotive Safety Systems GmbH, 63743 Aschaffenburg (DE)
(72) Erfinder: Hirzmann, Guido, 63877 Sailauf (DE)
(74) Vertreter: Mehnert, Bernhard

(56) Entgegenhaltungen:
- EP-A- 1 657 125
- DE-A1-102004 024 263
- JP-A- 2000 118 320

## Beschreibung

Die Erfindung betrifft eine Baugruppe zur beleuchteten Darstellung eines Logos in einem Kraftfahrzeug.

Kraftfahrzeuge sind außen und innen üblicherweise mit Emblemen versehen, die das Logo des Herstellers darstellen. Hierzu ist das Logo entweder auf einem flächigen Emblem abgebildet, oder das Emblem selbst hat die Form des Logos oder wenigstens Strukturen, die das Logo darstellen.

Das Gefühl für die Wertigkeit eines Fahrzeuginnenraums kann durch die Beleuchtung eines darin angeordneten Logos angehoben werden. Aus dem Stand der Technik sind mehrere Lösungen zur Beleuchtung eines Logos bekannt, die auf unterschiedlichen Techniken beruhen. Beispielhaft seien die DE-U-200 18 732, EP-A-1 000 809, JP-A-2005 215596, US-B-6 190 026, US-A-2005/0007752, US-A-2006/0023468 und WO-A-2005/016698 genannt. Ein weiteres Beispiel zeigt die DE 10 2004 024 263 A1, die auch gattungsbildend ist.

Die Anbringung und Beleuchtung eines Logos auf einer Airbagabdeckung, typischerweise im zentralen Lenkradbereich, bereitet gewisse Schwierigkeiten. Bei einer Beleuchtungsbaugruppe ist zu berücksichtigen, daß sich im Falle einer Airbagauslösung weder einzelne Bauteile von der Baugruppe noch die gesamte Baugruppe von der Abdeckung lösen dürfen.

Weitere Anforderungen an eine Baugruppe zur Beleuchtung sind ein geringes Gewicht und eine geringe Bauhöhe. Außerdem ist es wünschenswert, daß bislang unbeleuchtete Embleme für einen beleuchteten Einsatz weiterhin verwendbar bleiben, so daß keine Änderungen am Design und Aufbau der Embleme erforderlich ist.

Die Erfindung betrifft eine Baugruppe zur beleuchteten Darstellung eines Logos für ein Kraftlahrzeug gemäss Patent anspruch 1.

Vorteilhafte und zweckmäßige Ausgestatturtgen der erfindungsgemäßen Baugruppe sind in den Unteransprüchen angegeben.

Besondere Merkmale und Vorteile der Erfindung ergeben sich aus der nachfolgenden Beschreibung bevorzugter Ausführungsformen unter Bezugnahme auf die beigefügte Zeichnungen. In den Zeichnungen zeigen:
- Figur 1: eine Explosionsansicht einer nicht-erfindungsgemäßen ersten Baugruppe;
- Figur 2: den Lichtleiter der ersten Baugruppe;
- Figur 3: den Träger der ersten Baugruppe;
- Figur 4: die Leiterplatte der ersten Baugruppe;
- Figur 5: den Boden der ersten Baugruppe;
- Figur 6: die im Boden aufgenommene Leiterplatte der ersten Baugruppe;
- Figur 7: eine perspektivische Schnittansicht der ersten Baugruppe;
- Figuren 7a, 7b: Detailansichten aus Figur 7;
- Figur 7c: eine geschnittene Detailansicht des Lichtaustrittsbereichs der ersten Baugruppe;
- Figur 8: eine Explosionsansicht einer nicht-erfindungsgemäßen zweiten Baugruppe;
- Figur 9: die zweite Baugruppe im zusammengebauten Zustand;
- Figur 10: eine perspektivische Schnittansicht der zusammengebauten zweiten Baugruppe;
- Figur 11: eine schematische Schnittansicht der zweiten Baugruppe;
- Figur 12: eine Explosionsansicht einer nicht-erfindungsgemäßen dritten Baugruppe;
- Figur 13: die dritte Baugruppe im zusammengebauten Zustand;
- Figur 14: eine Schnittansicht der dritten Baugruppe;
- Figur 15: eine schematische Schnittansicht der dritten Baugruppe;
- Figur 16: die Umspritzung der dritten Baugruppe;
- Figur 17: eine schematische Schnittansicht einer nicht-erfindungsgemäßen vierten Baugruppe;
- Figur 18: eine schematische Schnittansicht einer nicht-erfindungsgemäßen fünften Baugruppe; und
- Figur 19: eine schematische Schnittansicht einer nicht-erfindungsgemäßen sechsten Baugruppe.

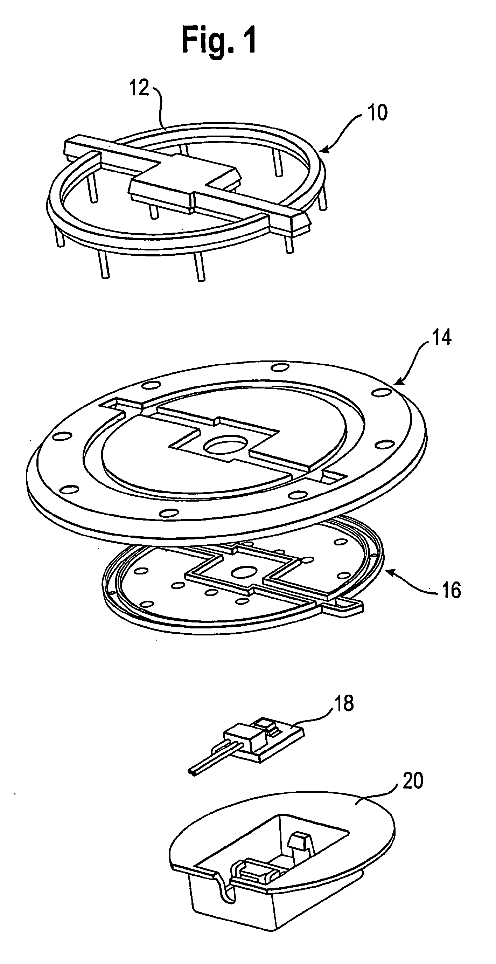

In den Figuren 1 bis 7 ist eine erfindungsgemäße erste Baugruppe dargestellt. Die Baugruppe umfaßt ein lichtundurchlässiges Emblem 10, das z. B. ein Logo 12 eines Automobilherstellers zeigt, einen lichtundurchlässigen Kunststoffträger 14, einen Lichtleiter 16, eine Leiterplatte 18 mit Elektronikbauteilen und einen Boden 20.

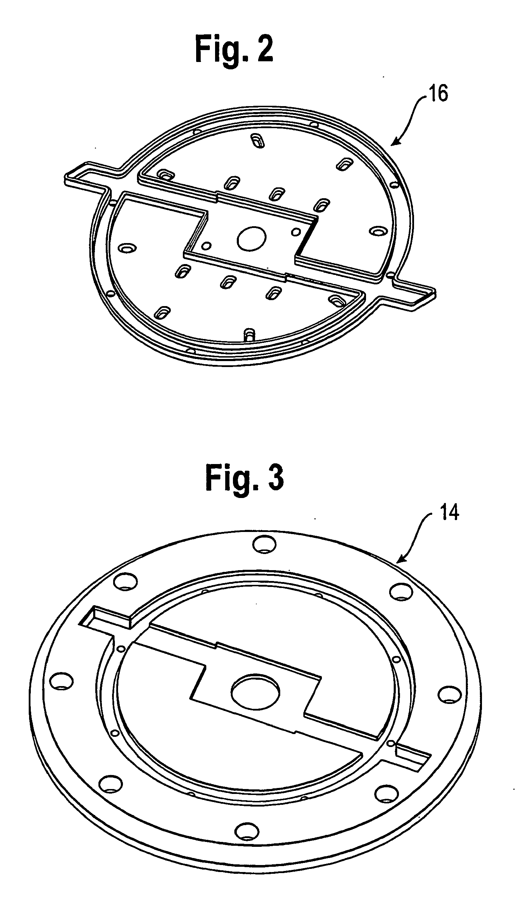

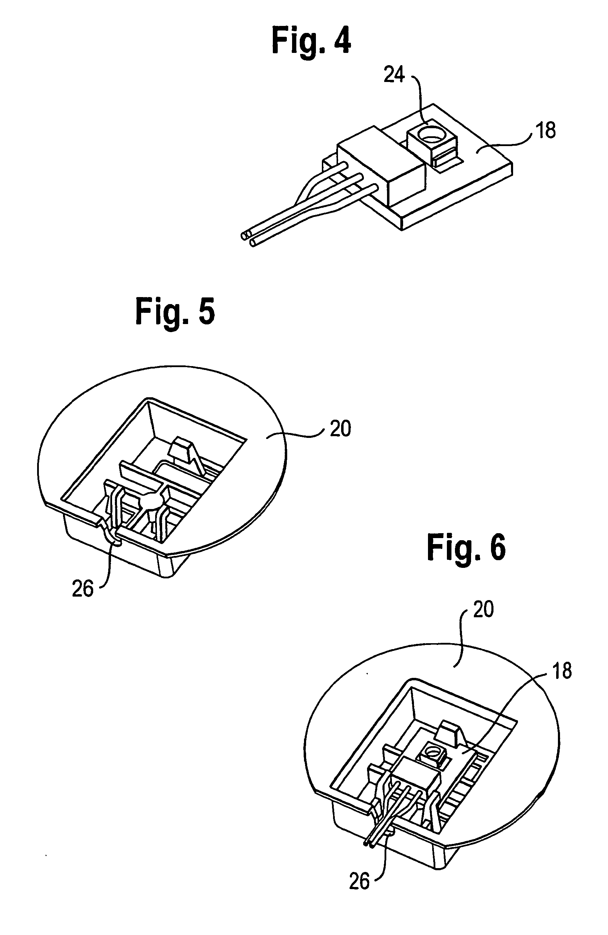

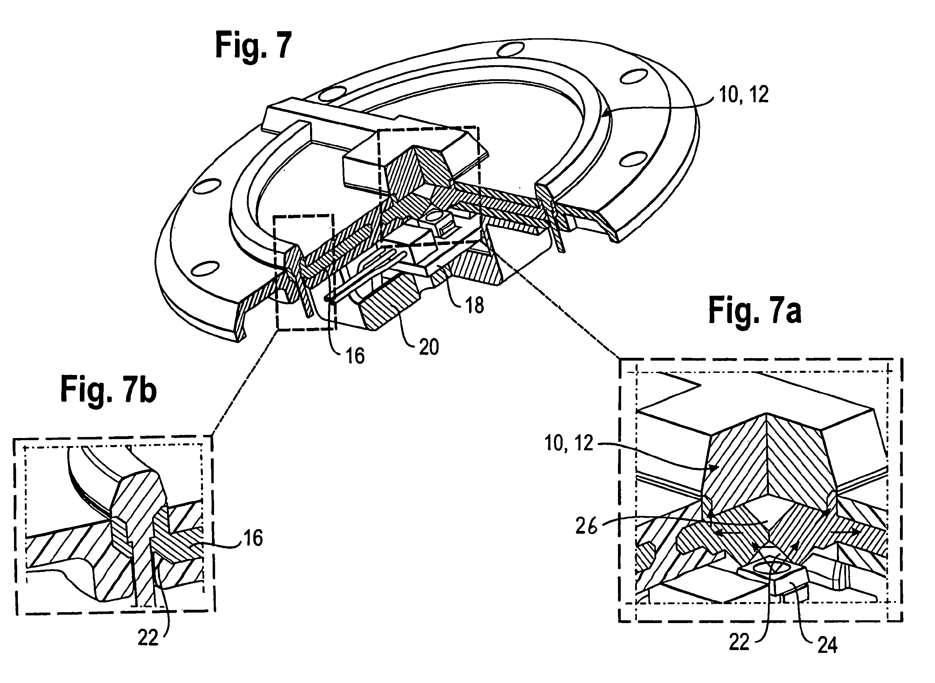

Das Emblem 10 ist ein dreidimensionales, reliefartiges massives Emblem und, ebenso wie bei den meisten der folgenden Ausführungsformen der Erfindung, im wesentlichen baugleich mit Emblemen, wie sie bislang unbeleuchtet verwendet wurden. Der in Figur 2 einzeln gezeigte Lichtleiter 16 ist ein auf die Form des Emblems 10 abgestimmtes Bauteil mit speziell angeordneten spiegelnd polierten Umlenkflächen 22 (siehe auch Detailansicht der Figur 7b). Der Lichtleiter 16 kann grundsätzlich auch aus einem anderen Material gebildet sein und ggf. eine reflektierende Beschichtung aufweisen. Der in Figur 3 einzeln gezeigte Kunststoffträger 14 für das Emblem 10 entsteht durch Umspritzen des Lichtleiters 16, vorzugsweise in einem Zweikomponentenspritzgußverfahren, wenn auch der Lichtleiter 16 ein Kunststoffteil ist. Auf der Leiterplatte 18 sind SMD-Bauteile (surface mounted devices) angeordnet (siehe Figur 4), insbesondere eine Leuchtdiode (LED) 24 als Lichtquelle. Für die Verkabelung der Leiterplatte 18 ist im Boden 20, der die Leiterplatte 18 aufnimmt und schützt, eine Aussparung 26 vorgesehen (siehe Figuren 5 und 6).

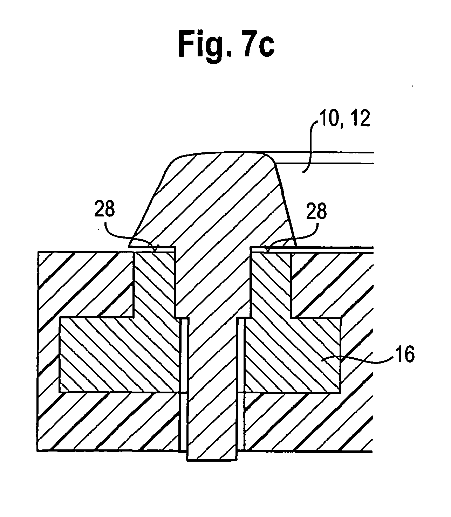

In Figur 7 ist die Baugruppe im zusammengebauten Zustand gezeigt. Die Leiterplatte 18 ist so angeordnet, daß die LED 24 zentral unter dem Emblem 10 und dem Lichtleiter 16 liegt. Die gleichmäßige Einkopplung des von der LED 24 ausgestrahlten Lichts in den Lichtleiter 16 wird durch einen als Diffusor wirkenden Kegel 26 des Lichtleiters 16 unterstützt, der direkt über der LED 24 angeordnet ist.

Wie aus Figur 7 und den Detailansichten der Figuren 7a und 7b hervorgeht, ist der Lichtleiter 16 so aufgebaut, daß das eingekoppelte Licht auf die Rückseite des Emblems 10 gerichtet wird. Dies wird durch die Umlenkflächen 22 ermöglicht, an denen das eingekoppelte Licht reflektiert wird. Der Lichtleiter 16 weist Lichtaustrittsflächen 28 auf, die den rückseitigen Randbereichen des Emblems 10 gegenüberliegen, diese aber seitlich nicht überragen (siehe Figur 7c). Da die Randbereiche des Emblems 10 nicht unmittelbar auf dem Lichtleiter 16 aufliegen, wird das Emblem 10 somit indirekt rückseitig beleuchtet. Es entsteht dabei ein Beleuchtungseffekt, der vergleichbar ist mit einer Corona.

Die Baugruppe wird - wie bislang das unbeleuchtete Emblem - mittels der Stifte des Emblems 10 an der Airbagabdeckung des Lenkrads befestigt. Dazu werden die Stifte nach dem Einsetzen in entsprechende Öffnungen der Airbagabdeckung auf deren Rückseite verschweißt, z. B. durch Ultraschallschweißen.

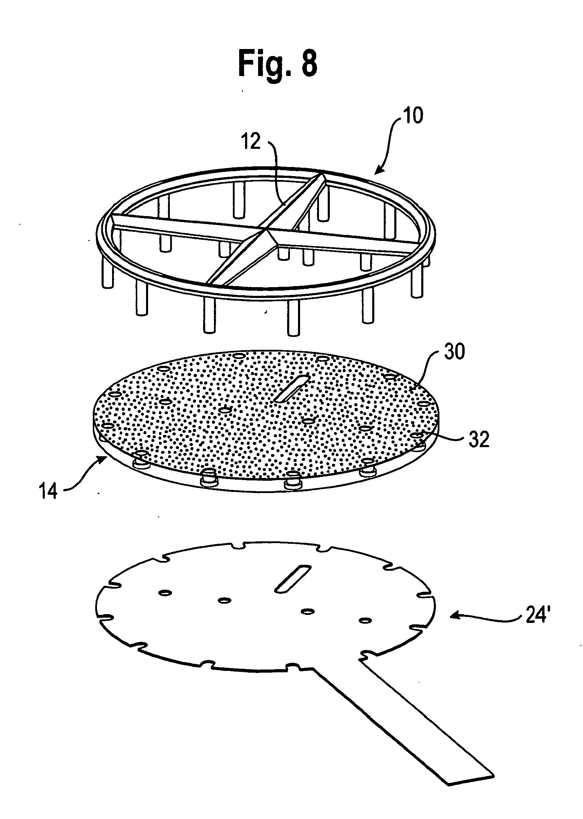

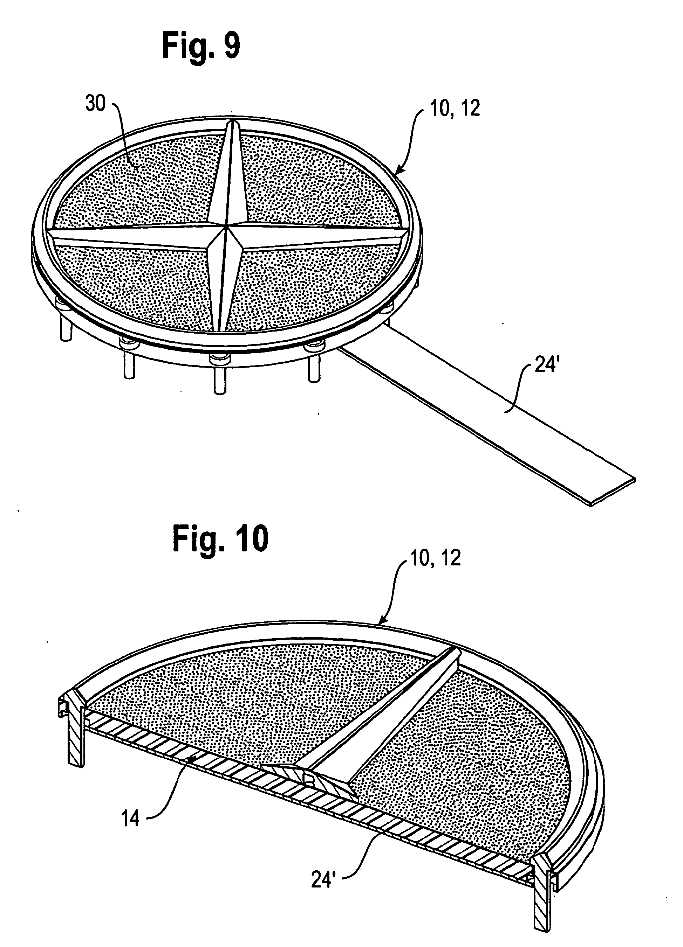

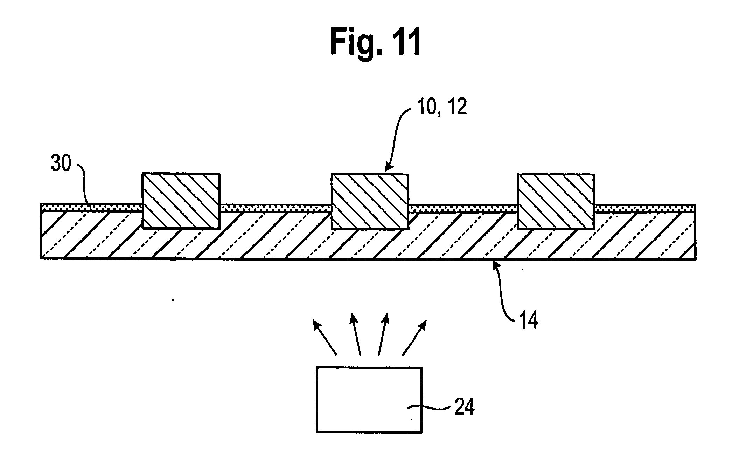

In den Figuren 8 bis 11 ist eine nicht-erfindungsgemäße zweite Baugruppe dargestellt. Die Baugruppe umfaßt ein dreidimensionales, reliefartiges massives Emblem 10, eine Elektrolumineszenzfolie 24' als Lichtquelle und einen transparenten Kunststoffträger 14. Die Verwendung von Elektrolumineszenzfolien zur Beleuchtung von Emblemen ist an sich bekannt (siehe z. B. DE-U-298 20 304), weshalb auf den Schichtaufbau und die elektrische Anregung der Folie 24' nicht weiter eingegangen wird. Die Folie 24' und der Träger 14 sind hinsichtlich Form, Befestigungsbohrungen etc. auf das Emblem 10 abgestimmt.

Die dem Emblem 10 zugewandte Oberfläche des Trägers 14 ist mit einem an sich lichtundurchlässigen Lack 30 beschichtet. Die Lackschicht weist aber Durchbrüche 32 auf, so daß an diesen Stellen Licht durch den Träger 14 hindurchtreten kann. Die Durchbrüche 32 können nach der Beschichtung des Trägers 14 mit Hilfe eines Lasers erzeugt werden. Es sind grundsätzlich beliebige Strukturen herstellbar, z. B. feine Wabenstrukturen für eine gleichmäßige Ausleuchtung oder größere Durchbrüche 32 für eine gezielte Ausleuchtung eines bestimmten Bereichs.

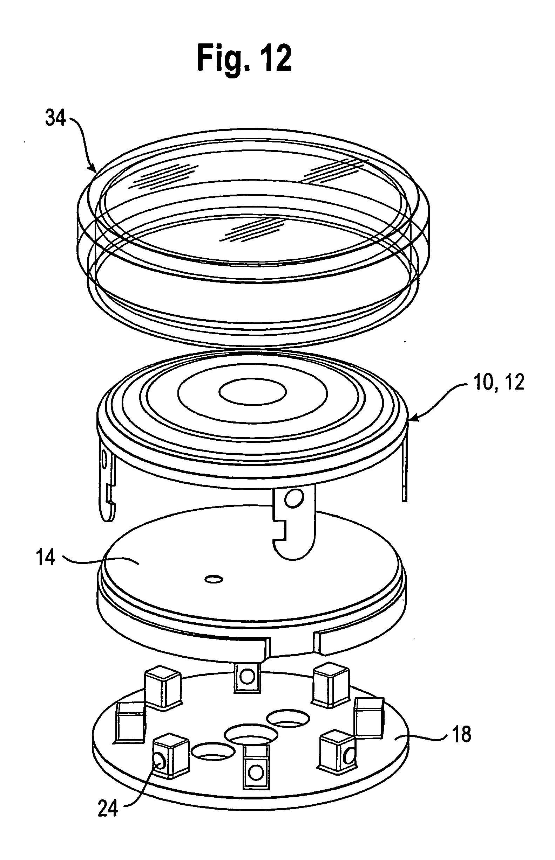

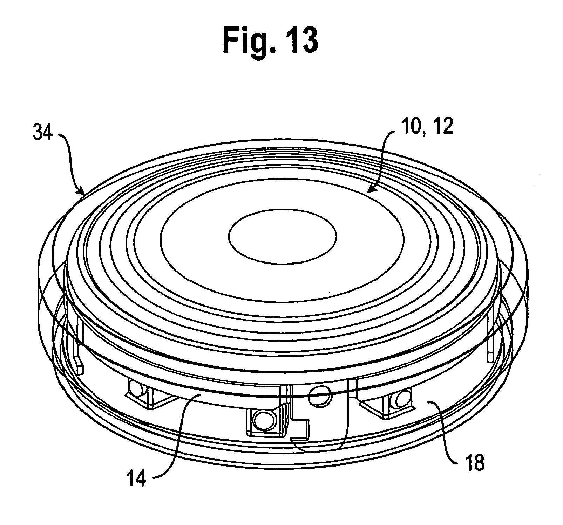

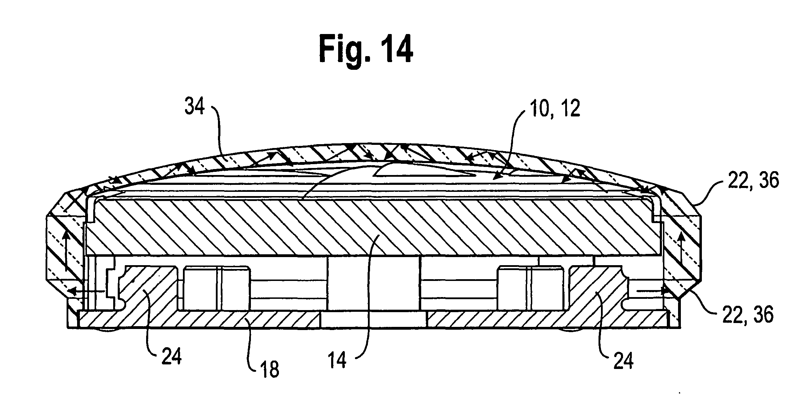

Eine nicht-erfindungsgemäße dritte Baugruppe ist in den Figuren 12 bis 16 dargestellt. Die in Figur 12 in Explosionsansicht und in den Figuren 13 und 14 im zusammengebauten Zustand gezeigte Baugruppe umfaßt eine u. a. mit LEDs 24 bestückte lichtundurchlässige Leiterplatte 18, einen lichtundurchlässigen Träger 14, ein lichtundurchlässiges Emblem 10 und eine transparente Kunststoff-Umspritzung 34 über dem Emblem 10.

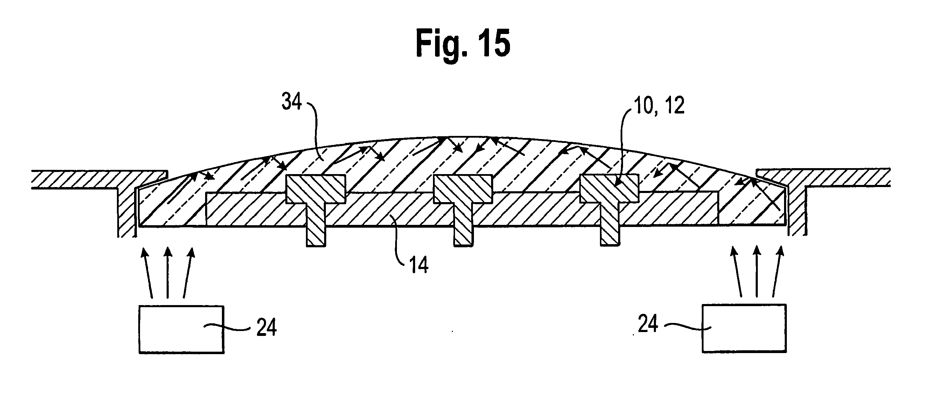

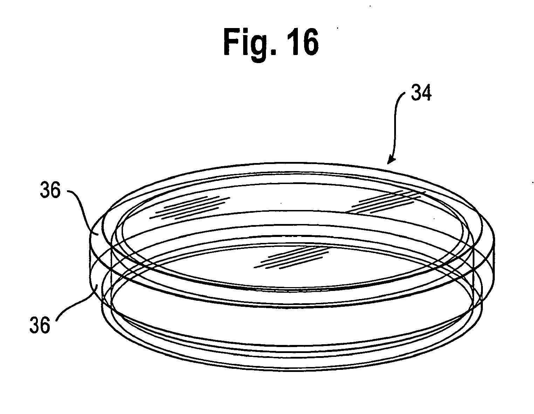

Diese Baugruppe zeichnet sich dadurch aus, daß das Licht der LEDs 24 durch geeignet angeordnete Umlenkflächen 22 seitlich am Träger 14 und am Emblem 10 vorbei in die transparente Umspritzung 34 eingekoppelt wird, wie in den Figuren 14 und 15 gezeigt. In der Umspritzung 34 erfolgt eine Umlenkung an deren Fasen 36 (siehe Figur 16). Das (zumindest teilweise) an der inneren Oberfläche der Umspritzung 34 reflektierte Licht beleuchtet dann das Emblem 10.

Bei einem nicht vollflächigen Emblem 10 kann das Licht (zusätzlich) auch zwischen den Emblemstrukturen hindurch in die transparente Umspritzung 34 eingekoppelt werden. In diesem Fall sind im Träger 14 entsprechende Durchbrüche vorgesehen.

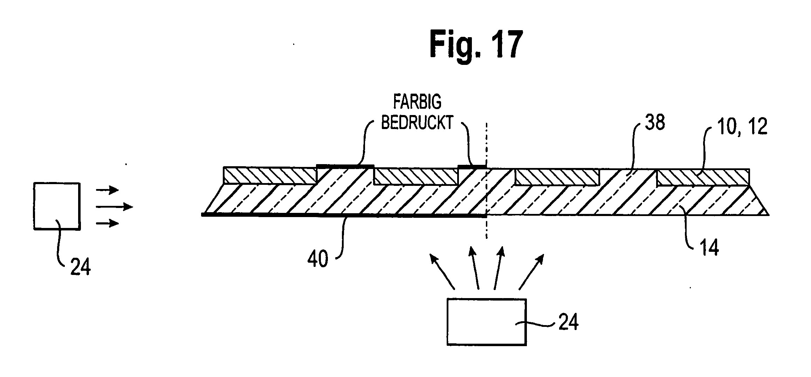

Ein weiteres Beleuchtungskonzept mit einer nicht-erfindungsgemäßen vierten Baugruppe ist in Figur 17 gezeigt. Die Baugruppe umfaßt hier einen transparenten Träger 14, der von einer Seite von einer oder mehreren LEDs 24 beleuchtet wird. Die andere Seite des Trägers 14 ist entsprechend dem aufliegenden lichtundurchlässigen Emblem 10 strukturiert. Das Licht kann somit nur durch die erhöhten Strukturen 38 der Trägeroberfläche austreten. (Es ist nicht zwingend erforderlich, daß die Strukturen 38 erhöht sind.)

Wie in der linken Hälfte der Figur 17 angedeutet, kann das Licht auch von der Seite in den transparenten Träger 14 eingekoppelt werden. Die nicht sichtbare Oberfläche des Trägers 14 kann mit einer Reflexionsfolie 40 oder einem reflektierenden Lack beschichtet sein. Die erhöhten Strukturen 38 der sichtbaren Oberfläche können bedruckt sein, um einen bestimmten Beleuchtungseffekt zu erzielen.

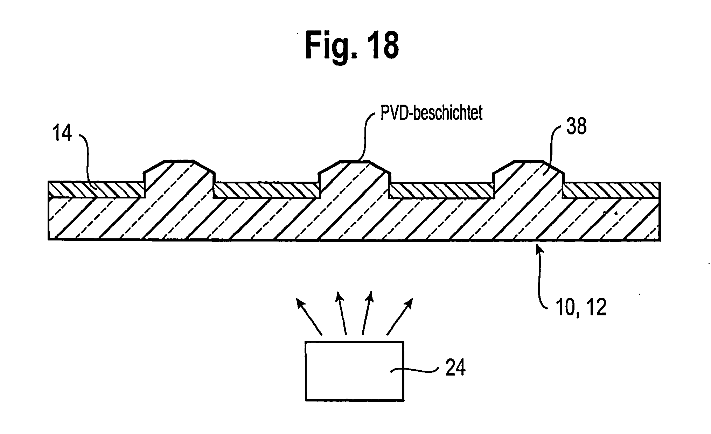

Das in Figur 18 dargestellte Beleuchtungskonzept mit einer nicht-erfindungsgemäßen fünften Baugruppe ist dem zuvor beschriebenen ähnlich, wobei hier Träger und Emblem vertauscht sind, d. h. der Träger 14 ist auf der dem Betrachter zugewandten Seite angeordnet, und das Emblem 10 hat erhöhte Strukturen 38. Dementsprechend ist hier das Emblem 10 transparent und der Träger 14 lichtundurchlässig. Die erhöhten Strukturen 38 des Emblems 10 sind PVD-beschichtet nach Art eines venezianischen Spiegels. Das Licht der LED(s) 24 tritt von der dem Betrachter abgewandten Seite in das Emblem 10 und kann durch die erhöhten Strukturen 38 austreten. Umgekehrt kann aber der Betrachter nicht durch die PVD-Beschichtung hindurchsehen.

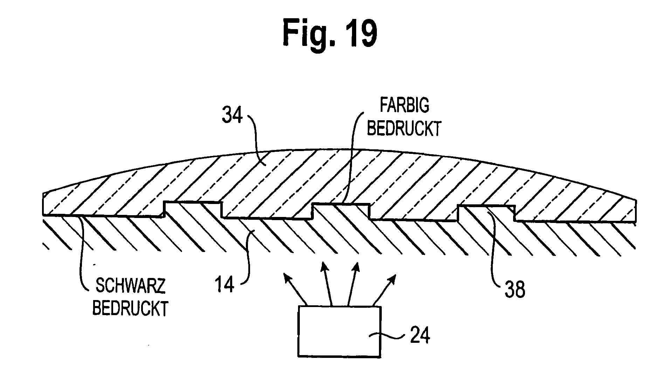

Ein letztes Beleuchtungskonzept mit einer nicht-erfindungsgemäßen sechsten Baugruppe ist in Figur 19 dargestellt. Ein transparenter Träger 14 weist erhöhte Strukturen 38 auf, die dem positiven oder negativen Logo 12 entsprechen, das beleuchtet dargestellt werden soll. Der Träger 14 ist mit einem transparenten Kunststoff 34 umspritzt, so daß die Logostruktur geschützt ist. Das Licht einer oder mehrerer LEDs 24 wird von der anderen Seite in den Träger 14 eingekoppelt. Der Träger 14 ist auf der dem Betrachter zugewandten Seite mit Ausnahme der erhöhten Strukturen 38 schwarz bedruckt, so daß dort kein Licht austreten kann. Die erhöhten Strukturen 38 sind dagegen farbig bedruckt und lichtdurchlässig, so daß das Logo 12 farbig beleuchtet erscheint.

Die beispielhaft beschriebenen Ausführungsformen zeigen eine Reihe von Maßnahmen zur beleuchteten Darstellung eines Logos 12, die auch untereinander kombinierbar sind.

## Patentansprüche

1. Baugruppe zur beleuchteten Darstellung eines Logos (12) für ein Kraftfahrzeug, mit einem Träger (14) und wenigstens einer Lichtquelle (24), die hinter oder neben dem Träger (14) angeordnet ist, sowie einem das Logo (12) darstellenden lichtundurchlässigen Emblem (10) und einem Lichtleiter (16) mit Lichtumlenkflächen (22), die das Licht der Lichtquelle (24) auf die Rückseite des Emblems (10) richten, **dadurch gekennzeichnet, dass** der Träger (14) eine in einem Spritzgussverfahren hergestellte lichtundurchlässige Umspritzung des Lichtleiter (16) ist

2. Baugruppe nach Anspruch 1, **dadurch gekennzeichnet, dass** der Lichtleiter (16) Lichtaustrittsflächen (28) aufweist, die den rückseitigen Randbereichen des Emblems (10) gegenüberliegen.

3. Baugruppe nach Anspruch 2, **dadurch gekennzeichnet, dass** die Lichtaustrittsflächen (28) die rückseitigen Randbereiche des Emblems (10) seitlich nicht überragen.

4. Baugruppe nach einem der vorhergehenden Ansprüche, **dadurch gekennzeichnet, dass** die Randbereiche des Emblems (10) nicht unmittelbar auf dem Lichtleiter (16) aufliegen.

5. Baugruppe nach einem der vorhergehenden Ansprüche, **dadurch gekennzeichnet, dass** die Lichtquelle (24) auf einer Leiterplatte (18) angeordnet ist, die in einem Boden (20) der Baugruppe aufgenommen ist.

6. Baugruppe nach einem der vorhergehenden Ansprüche, **gekennzeichnet durch** einen Diffusor (26) zur gestreuten Einkopplung des Lichts der Lichtquelle (24) in den Lichtleiter (16).

7. Baugruppe nach Anspruch 6, **dadurch gekennzeichnet, dass** die Lichtquelle (24) zentral unter dem Logo (12) angeordnet ist und der Diffusor (16) direkt über der Lichtquelle (24) angeordnet ist.

8. Baugruppe nach einem der vorhergehenden Ansprüche, **dadurch gekennzeichnet, dass** ein sichtbares transparentes Teil der Baugruppe wenigstens teilweise eine "physical vapour deposition" (PVD) - Beschichtung aufweist.

## Claims

1. A component for illuminated representation of a logo (12) for an automotive vehicle, comprising a carrier (14) and at least one light source (24) arranged behind or adjacent to the carrier (14) as well as an opaque emblem (10) representing the logo (12) and a light conductor (16) including light deflecting areas (22) which direct the light of the light source (24) to the rear side of the emblem (10), **characterized in that** the carrier (14) is an opaque injection molding around the light conductor (16) manufactured by an injection molding method.

2. The component according to claim 1, **characterized in that** the light conductor (16) includes light emission areas (28) that are opposed to the rear marginal areas of the emblem (10).

3. The component according to claim 2, **characterized in that** the light emission areas (28) do not laterally protrude from the rear marginal portions of the emblem (10).

4. The component according to any one of the preceding claims, **characterized in that** the marginal areas of the emblem (10) do not bear directly on the light conductor (16).

5. The component according to any one of the preceding claims, **characterized in that** the light source (24) is arranged on a printed board (18) accommodated in a bottom (20) of the component.

6. The component according to any one of the preceding claims, **characterized by** a diffuser (26) for scattered input of the light of the light source (24) into the light conductor (16).

7. The component according to claim 6, **characterized in that** the light source (24) is arranged centrally beneath the logo (12) and the diffuser (16) is arranged directly above the light source (24).

8. The component according to any one of the preceding claims, **characterized in that** a visible transparent member of the component at least partially includes a "physical vapor deposition" (PVD) coating.

## Revendications

1. Ensemble destiné à l'éclairage d'un logo (12) pour un véhicule automobile, comportant un support (14) et au moins une source de lumière (24) qui est disposée derrière ou à côté de l'élément porteur (14), ainsi qu'un logo (12) représentant l'emblème opaque (10) et un guide optique (16) avec des zones réfléctrices de lumiere (22) qui dirigent la lumière provenant de la source de lumière (24) depuis l'arrière de l'emblème (10), **caractérisé en ce que** le support (14) est fabriqué par surmoulage et injection de zone opaque du guide optique (16).

2. Ensemble selon la revendication 1, **caractérisé en ce que** le guide optique (16) possède des surfaces de sortie de lumière (28) qui se trouvent en face des zones de bord arrière de l'emblème (10).

3. Ensemble selon la revendication 2, **caractérisé en ce que** les surfaces de sortie de lumière (28) des régions de bord arrière de l'emblème (10) ne dépassent pas sur les côtés.

4. Ensemble selon l'une quelconque des revendications précédentes, **caractérisé en ce que** les zones de bord de l'emblème (10) ne reposent pas directement sur le guide de lumière (16).

5. Ensemble selon l'une quelconque des revendications précédentes, **caractérisé en ce que** la source de lumière (24) est agencée sur une carte de circuit imprimé (18), elle-même disposée sur le fond (20) de l'ensemble.

6. Ensemble selon l'une quelconque des revendications précédentes, **caractérisé par** un diffuseur (26) pour coupler la lumière diffusée provenant de la source de lumière (24) dans le guide optique (16).

7. Ensemble selon la revendication 6, **caractérisé en ce que** la source de lumière (24) est disposée au centre sous le logo (42) et le diffuseur (16) est disposé directement au-dessus de la source de lumière (24).

8. Ensemble selon l'une quelconque des revendications précédentes, **caractérisé en ce que** une partie visible et transparente de l'ensemble présente au moins partiellement un revêtement de type "dépôt en phase vapeur »(PVD).
